# FASCICULE DE BREVET EUROPEEN

(11) **EP 2 506 535 B1**
(45) Date de publication et mention de la délivrance du brevet: **17.06.2020**
(21) Numéro de dépôt: 12161273.3
(22) Date de dépôt: 26.03.2012
(51) Int. Cl.: H04L 29/08, H04L 29/06, H04L 12/18, H04L 12/58

(54) **Procédé de gestion de session applicative**
Verwaltungsverfahren von Anwendungssitzungen
Method for managing an application session

(30) Priorité: 31.03.2011 FR 1152736
(43) Date de publication de la demande: 03.10.2012
(73) Titulaire: Orange, 75015 Paris (FR)
(72) Inventeur: Tronet, Sarah, 22300 LANNION (FR); Levee, François-Joseph, 22550 HENANBIHEN (FR)
(74) Mandataire: Regimbeau

(56) Documents cités:
- EP-A1- 1 478 134
- EP-A1- 2 061 212
- EP-A1- 2 093 968
- WO-A1-2010/139898
- WO-A2-2010/081146
- JP-A- 2007 199 995
- JP-A- 2010 282 460
- US-A1- 2004 133 683
- US-A1- 2007 106 670
- US-A1- 2009 235 343
- US-A1- 2009 316 686
- US-B2- 7 000 019
- INTERDIGITAL COMMUNICATIONS: "MIP based Inter-UE-Transfer mechanism", 3GPP DRAFT; S2-103543_S2_80_MIP_IUT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Brunstad; 20100903, 23 août 2010 (2010-08-23), XP050458385,
- "3rd Generation Partnership Project;Technical Specification Group Services and System Aspects;IP Multimedia Subsystem (IMS) Service Continuity;Inter-UE Transfer enhancements; Stage 2(Release 10)", 3GPP DRAFT; 23831-100, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Brunstad; 20100903, 24 août 2010 (2010-08-24), XP050458394,
- 3GPP ET AL: "IP Multimedia Subsystem (IMS) service continuity enhancements; Service, policy and interaction; Stage 2 (3GPP TR 23.838 version 9.0.0 Release 9)", 3GPP TR 23.838 V9.0.0, , 1 juin 2009 (2009-06-01), pages 1-51, XP002583089, Extrait de l'Internet: URL:http://www.3gp.org/ftp/Specs/archive/2 3_series/23.838/23838-900.zip [extrait le 2010-05-19]

## Description

La présente invention concerne la gestion d'une session applicative accessible par plusieurs terminaux de communication, par exemple une session applicative selon le protocole HTTP (« Hypertext Transfert Protocol ») mise en œuvre sur un serveur d'application internet (ou « serveur d'application WEB » aussi nommé « serveur WEB »).

Des sociétés de fourniture de services offrent actuellement des services sur des réseaux de communication de type Internet en utilisant le protocole HTTP et des serveurs d'application WEB, la mise en oeuvre d'une application par un serveur WEB permettant la fourniture d'un service à des terminaux de communication à travers un réseau de communication Internet. Les serveurs d'applications PHP (sigle de « Hypertext Preprocessor »), et les moteurs de « servlets » HTTP sont des technologies utilisées pour mettre en oeuvre ces services offerts par un serveur WEB, aussi nommé service WEB.

Lors de la mise en oeuvre d'un même service WEB, un serveur WEB peut gérer une ou plusieurs sessions applicatives connectées simultanément. Ces sessions applicatives sont aussi nommées « sessions applicatives clients » lorsque chaque session applicative est associée à une interface d'accès d'un terminal de communication, communément appelé un client, ayant requis l'accès à ce service WEB. Lors de la gestion d'une pluralité de sessions applicatives simultanées, le serveur d'application mettant en œuvre le service Web assure une étanchéité des contextes d'exécution de l'application mettant en œuvre le service pour chaque client, et par conséquent, pour chaque session applicative client. A cet effet, des objets de session propres à chaque client sont utilisés, par exemple l'objet « HTTPSession » dans le cas des servlets HTTP pour établir et gérer une session applicative propre à chaque client.

Lorsqu'un client HTTP, tel qu'un navigateur WEB, une application sur PDA ou autre, utilise un service WEB, ce service WEB authentifie l'utilisateur du client HTTP en utilisant, par exemple, un serveur d'authentification et accède à une base de données utilisateur pour récupérer des données propres à l'utilisateur et nécessaires au bon fonctionnement du service.

Avec la multiplication des services offerts en ligne aux utilisateurs (commerce en ligne, réseaux sociaux ou autre) et la multiplication des terminaux de communication utilisés par les utilisateurs (ordinateurs personnels, ordinateurs professionnels, téléphones mobiles ou autre), il peut être avantageux d'offrir aux utilisateurs une continuité de service sur une même session applicative selon qu'ils utilisent l'un ou l'autre de leurs terminaux de communication. Différents procédés de gestion de session applicative sont connus des demandes de brevet ou brevets suivants: US2009/316686 A1, US7000019 B2, EP14478134 A1, US2004/133683 A1, US2009/235343 A1, et JP2007/199995 A.

La présente invention s'inscrit dans ce cadre et est définie par les revendications indépendantes de procédé 1, de serveur 7, et de système 10.

Ainsi, la présente invention concerne, selon un premier aspect, un procédé de gestion de session applicative mise en œuvre au moyen d'un serveur d'application, ladite session applicative étant accessible par une pluralité de terminaux de communication d'un groupe de terminaux de communication, le procédé de gestion comportant une fourniture d'un accès pour un premier terminal de communication à une session applicative courante, si le premier terminal de communication appartient à un premier groupe de terminaux de communication associé à la session applicative courante.

Ainsi, un utilisateur ayant initié une session applicative sur un terminal peut accéder à cette même session applicative à partir d'un autre terminal tout en lui assurant une cohérence des données utilisateurs.

Par ailleurs, le serveur d'application mettant en œuvre le service n'a pas à recréer de contexte d'utilisation à chaque fois que l'utilisateur se connecte au même service mais avec un terminal différent.

On obtient ainsi une réduction du trafic de communication nécessaire à un serveur d'application pour mettre en œuvre une session applicative.

En outre, il est possible d'éviter les conflits entre les différents accès au même service par plusieurs terminaux, alors que d'autres accès sont encore en cours par d'autres terminaux. En effet, vu que les terminaux accèdent à la même session applicative, les paramètres de cette session applicative évoluent de manière unique pour tous les terminaux. Le risque de voir une divergence apparaître est réduit.

L'invention peut trouver une application dans le partage d'application WEB par plusieurs terminaux appartenant à un même utilisateur, par exemple dans les applications de commerce en ligne (« e-commerce »), dans lesquelles il est possible, pour un même utilisateur, de partager le panier des objets sélectionnés pour l'achat entre plusieurs terminaux de l'utilisateur (ordinateur fixe, ordinateur portable, « Smartphone », PDA ou autre).

Par exemple, la fourniture d'accès à la session applicative courante est réalisée en utilisant un identifiant de session de la session applicative courante en fonction d'un premier identifiant client compris dans une requête d'accès à la session applicative en provenance du premier terminal de communication.

La transmission de l'identifiant de session permet aux terminaux appartenant au même groupe d'accéder à la session applicative en cours, sans qu'il soit nécessaire pour le serveur d'application d'exécuter une nouvelle fois la mise en place de la session applicative.

L'identifiant de client peut par exemple être un identifiant de terminal. Dans ce cas, l'identifiant de groupe associé à la session courante est déterminé. L'identifiant de client peut aussi être un identifiant de groupe

Le procédé peut en outre comporter une étape consistant à déterminer si le premier terminal de communication appartient au premier groupe de terminaux de communication associé à la session applicative courante.

On peut aussi prévoir que lors d'un établissement d'une session applicative suite à la réception d'une requête d'accès à une session applicative d'un deuxième terminal de communication appartenant à un deuxième groupe de terminaux de communication, une association du deuxième groupe de terminaux de communication à la session applicative, la session applicative ainsi établie constituant une session applicative courante.

Par exemple, l'association est réalisée en associant un troisième identifiant client fonction d'un deuxième identifiant client à un identifiant de session de la session applicative, la requête d'accès comportant le deuxième identifiant client.

Le groupe de terminaux associé à la session applicative courante peut être formé par des terminaux de communication associés à un utilisateur ou à un groupe d'utilisateurs.

Le procédé peut en outre comporter une étape de réception d'une requête d'accès au serveur d'application pour accéder à la session applicative courante provenant du premier terminal, ladite requête d'accès comportant le deuxième identifiant permettant d'accéder à ladite session applicative courante.

La session applicative peut être accessible simultanément par la pluralité de terminaux de communication.

Selon un deuxième aspect, l'invention concerne un procédé de gestion de session applicative mise en œuvre au moyen d'un serveur d'application, cette session applicative étant accessible par une pluralité de terminaux de communication d'un groupe de terminaux de communication. Le procédé comporte les étapes suivantes, mises en œuvre par le serveur d'application :
- recevoir de la part d'un premier terminal de communication, un premier identifiant permettant de déterminer un groupe de terminaux auquel le premier terminal appartient,
- déterminer, au moyen du premier identifiant, si le premier terminal appartient à un groupe de terminaux de communication associé à une session applicative courante, et
- si le premier terminal appartient audit groupe de terminaux de communication associé à ladite session applicative courante, transmettre au premier terminal un deuxième identifiant de la session applicative courante, le deuxième identifiant permettant au premier terminal d'accéder à la session applicative courante.

On peut en outre prévoir les étapes suivantes mises en œuvre par le serveur d'application préalablement à la réception du premier identifiant :
- recevoir de la part d'un deuxième terminal de communication appartenant à un deuxième groupe de terminaux de communication, un troisième identifiant permettant de déterminer le deuxième groupe de terminaux de communication auquel le deuxième terminal appartient, et
- associer le troisième identifiant à une session applicative, la session applicative constituant la session applicative courante.

Dans des exemples de réalisation, le groupe de terminaux associé à la session applicative courante est formé par des terminaux de communication associés à un utilisateur ou à un groupe d'utilisateurs.

Par exemple, le premier identifiant comporte au moins l'un des identifiants suivants : un numéro de téléphone, un nom symbolique, un numéro d'abonné, une adresse sur un réseau de communication, lesdits identifiants étant associés à un utilisateur ou un groupe d'utilisateurs.

Dans des modes de réalisation, on peut prévoir en outre une étape de réception d'une requête d'accès au serveur d'application pour accéder à la session applicative courante provenant du premier terminal, cette requête d'accès comportant le deuxième identifiant permettant d'accéder à la session applicative courante.

Par exemple, la session applicative est accessible simultanément par la pluralité de terminaux de communication.

Par exemple encore, la session applicative est une session applicative HTTP.

Un troisième aspect de l'invention concerne un programme d'ordinateur ainsi qu'un produit programme d'ordinateur et un support de stockage pour de tels programme et produit, permettant la mise en œuvre d'un procédé selon le premier ou le deuxième aspect lorsque le programme est stocké dans une mémoire d'un serveur d'application et exécuté par un processeur d'un tel serveur d'application.

Un quatrième aspect de l'invention concerne un serveur d'application configuré pour la mise en œuvre d'un procédé selon le premier ou le deuxième aspect de l'invention.

Un cinquième aspect de l'invention concerne un système de communication comportant un serveur d'application selon le quatrième aspect de l'invention et un terminal de communication utilisant la session applicative mise en œuvre par le serveur d'application.

Les objets selon les deuxième, troisième, quatrième et cinquième aspects de l'invention procurent au moins les mêmes avantages que ceux procurés par le procédé selon le premier aspect.

D'autres caractéristiques et avantages de l'invention apparaîtront à la lecture de la présente description détaillée qui suit, à titre d'exemple non limitatif, et des figures annexées parmi lesquelles :
- la figure 1 illustre un contexte de mise en œuvre de modes de réalisation ;
- la figure 2 illustre des étapes d'échange de données entre le serveur d'application et les terminaux selon un mode de réalisation ;
- la figure 3 est un organigramme récapitulatif d'étapes mises en œuvre auprès d'un serveur d'application selon un mode de réalisation ; et,
- la figure 4 illustre un serveur d'application selon un mode de réalisation.

Dans la suite, une session applicative est une session durant laquelle un serveur d'application met en œuvre une application notamment pour fournir un service à un terminal de communication (le serveur d'application est alors aussi un dispositif de communication avec lequel le terminal de communication a établi une session de communication permettant des échanges entre le terminal de communication et le serveur d'application dans le cadre de la session applicative).

Une session de communication est établie entre deux dispositifs de communication éventuellement par l'intermédiaire d'un serveur de communication pour permettre des échanges via cette session de communication entre les deux dispositifs de communication, les échanges peuvent être de la voix, de l'image, de la vidéo, des données y compris les données échangées pour initier une session applicative et les données échangées dans le cadre d'une telle session applicative.

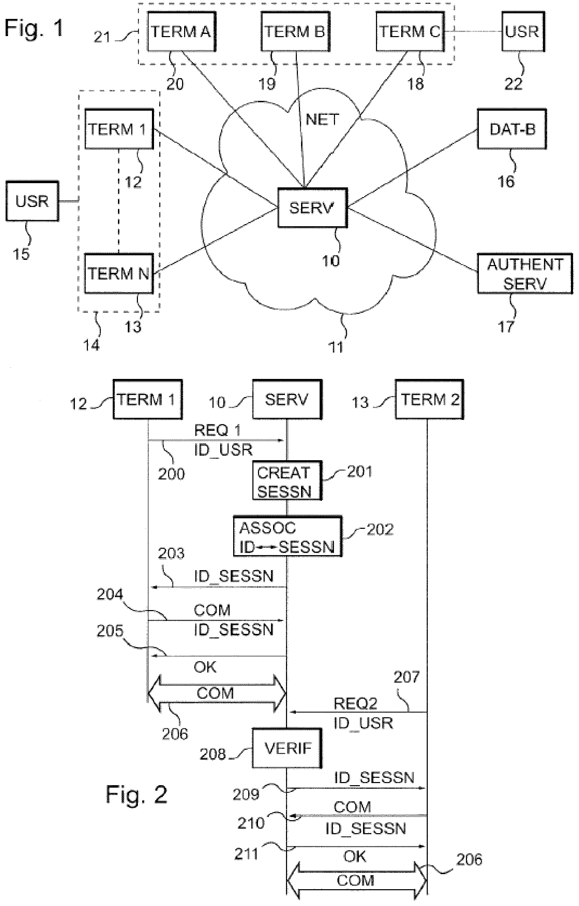

La figure 1 illustre un contexte de mise en œuvre de modes de réalisation de l'invention.

Un serveur d'application 10 appartenant à un réseau de communication 11 (par exemple un serveur d'application internet) fournit un service de communication (par exemple un jeu en ligne, un forum de discussion en ligne (« chat »), un commerce en ligne ou autre) à une pluralité de terminaux de communication 12, 13 (par exemple des téléphones mobiles, des ordinateurs portables ou fixes, des assistants personnels PDA (« personal digital assistant ») ou autre). Les terminaux 12, 13 appartiennent à un groupe de terminaux 14. Par exemple, les terminaux 12, 13 font partie du groupe des terminaux de communication appartenant à un utilisateur 15 abonné au service de communication offert par le serveur d'application 10 via le réseau 11. On peut envisager d'autres types de groupes selon le service (équipe de joueurs en ligne, membres d'un réseau d'utilisateurs ou autre).

D'autres terminaux 18, 19, 20 appartenant à un autre groupe de terminaux 21 peuvent aussi accéder aux services offerts par le serveur d'application 10. Par exemple, les terminaux 18, 19 et 20 appartiennent à un autre utilisateur 22.

Lors de l'établissement d'une session applicative, le serveur d'application 10 peut accéder à une base de données 16 et à un serveur d'application d'authentification 17.

La base de données contient par exemple le profil de l'utilisateur des terminaux. Ce profil permet de choisir des paramètres pour la session applicative comme par exemple le type de service à fournir, la tarification à utiliser, la bande passante à utiliser, le débit de données à utiliser ou autre.

Le serveur d'application d'authentification permet par exemple de vérifier qu'un terminal qui sollicite une connexion a effectivement le droit d'accéder au service offert par le serveur d'application. L'authentification peut se faire par différents moyens comme par exemple par mot de passe.

Lorsqu'une session applicative est crée pour l'utilisateur à partir d'un premier terminal du groupe, le serveur d'application permet d'accéder à la même session applicative à partir d'un autre terminal du groupe comme expliqué dans la suite.

La figure 2 illustre des étapes d'échange de données entre le serveur d'application et les terminaux selon un mode de réalisation envisageable.

Le terminal 12 envoie une requête d'accès 200 au serveur d'application 10 Cette requête d'accès est par exemple une requête d'accès « HTTP GET » suivie de l'adresse URL (« Uniform Ressource Locator ») du service offert par le serveur d'application 10. La requête d'accès est accompagnée d'un identifiant du groupe auquel appartient le terminal. Par exemple, l'identifiant est un numéro de téléphone, une adresse de messagerie électronique, une adresse réseau (telle qu'une adresse IP (« internet protocol »)), un nom symbolique, un numéro d'abonné ou autre.

Une fois la requête d'accès 200 reçue, le serveur d'application 10 vérifie qu'il n'existe pas de session applicative en cours pour le groupe de terminaux auquel appartient le terminal 12 et crée une session applicative lors d'une étape 201, par exemple une session applicative HTTP. Cette session applicative est associée à un identifiant de session.

L'identifiant de session est ensuite associé à l'identifiant de groupe transmis avec la requête d'accès 200 lors d'une étape 202.

Par exemple, l'association est faite dans une table de correspondance (non représentée), stockée par exemple auprès du serveur d'application 10, qui permet au serveur d'application de savoir, lorsqu'il reçoit une requête d'accès à une session applicative, si une session applicative courante est déjà en cours pour le groupe de terminaux auquel appartient le terminal qui sollicite la connexion.

Ensuite, le serveur d'application envoie l'identifiant de session au terminal 12 dans un message 203. La réception du message permet au terminal d'adjoindre un en-tête (ou « cookie ») à ses futurs messages pour indiquer qu'ils se rapportent à la session applicative crée par le serveur d'application. Par exemple, le message 203 est un message « http 200 OK», accompagné de l'instruction « Set Cookie : Jsession ID = xxxx », où xxxxx représente l'identifiant de session.

Afin d'accéder à la session applicative, le terminal 12 envoie une requête d'accès 204 avec comme en-tête, ou cookie, l'identifiant de session préalablement reçu du serveur d'application.

Le serveur d'application renvoie un message d'acquittement 205, et la session applicative 206 se déroule.

Maintenant, on suppose que l'utilisateur laisse la session applicative ouverte, mais change de terminal. Il n'utilise plus le terminal 12 mais utilise maintenant le terminal 13. Il souhaite toutefois continuer la même session applicative 206.

Le terminal 13 envoie une requête d'accès 207 vers le serveur d'application avec l'identifiant du groupe auquel appartient le terminal (ici, on rappelle que les terminaux 12 et 13 appartiennent au même groupe de terminaux 14 et donc qu'ils partagent le même identifiant de groupe).

Le serveur d'application met alors en œuvre une vérification 208 lors de laquelle il consulte la table de correspondance pour déterminer si une session applicative est ouverte pour le groupe de terminaux désigné par l'identifiant transmis par le terminal 13.

Comme dans le présent exemple c'est le cas, le serveur d'application transmet l'identifiant de la session concernée (c'est-à-dire celle ouverte par le terminal 12) au terminal 13 dans un message 209.

Des messages 210 et 211, respectivement similaires aux messages 204 et 205 sont alors échangés entre le terminal 13 et le serveur d'application et le terminal 13 accède à la session applicative courante 206.

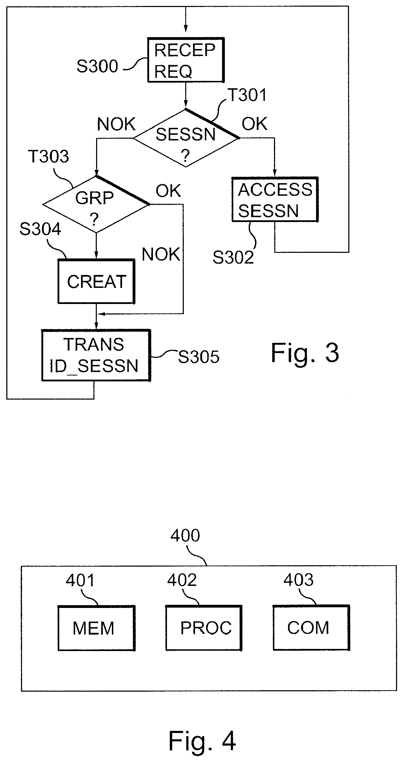

La figure 3 est un organigramme récapitulatif d'étapes mises en œuvre auprès d'un serveur d'application selon un mode de réalisation.

Dans une première étape S300, le serveur d'application reçoit de la part d'un terminal de communication une requête d'accès pour accéder à une session applicative.

Le serveur d'application détermine ensuite lors d'une étape T301 si le terminal souhaite accéder à une session applicative particulière. Par exemple, il détermine si la requête d'accès est accompagnée d'un identifiant de session.

Si la session applicative à laquelle le terminal souhaite accéder est identifiée, le procédé passe à l'étape S302 lors de laquelle il est donné accès à cette session applicative. Le procédé repasse alors à l'étape S300 pour recevoir une prochaine requête d'accès.

Si au contraire aucune session applicative n'est identifiée, par exemple parce que le terminal ne transmet pas d'identifiant de session, le procédé passe à l'étape T303.

Lors de cette étape, il est déterminé si le terminal appartient à un groupe de terminaux auquel est associé une session applicative courante. Cela est par exemple mis en oeuvre au moyen d'un identifiant de groupe transmis par le terminal et une table de correspondance stockée auprès du serveur d'application comme déjà évoqué ci-dessus.

Si le terminal n'appartient pas à un groupe pour lequel une session applicative est en cours, le procédé passe à l'étape S304.

Lors de cette étape S304 une session applicative est crée, puis un identifiant de cette session applicative est alors transmis au terminal lors de l'étape suivante S305.

Si au contraire le terminal appartient bien à un groupe pour lequel une session applicative est en cours, on passe directement à l'étape S305 lors de laquelle il est transmis au terminal l'identifiant de la session applicative en cours.

Après l'étape S305, le procédé repasse à l'étape S300, lors de laquelle le terminal peut accéder à la session applicative créée ou la session applicative en cours en accompagnant sa requête d'accès de l'identifiant reçu lors de l'étape S305.

Un programme d'ordinateur pour la mise en œuvre d'un procédé selon un mode de réalisation de l'invention peut-être réalisé à partir de l'organigramme général de la figure 3 et de la présente description détaillée.

Un serveur d'application selon un mode de réalisation est décrit en référence à la figure 4.

Le serveur d'application 400 de la figure 4 comporte une unité de mémoire 401. Cette unité de mémoire comporte une mémoire vive pour stocker de manière non durable des données de calcul utilisées lors de la mise en oeuvre d'un procédé selon des modes de réalisation. L'unité de mémoire comporte par ailleurs une mémoire non volatile (par exemple du type EEPROM) pour stocker par exemple un programme d'ordinateur selon un mode de réalisation pour son exécution par un processeur (non représenté) d'une unité de contrôle 402 du serveur d'application. Par exemple, l'unité de mémoire stocke une table de correspondance entre les identifiants de groupe et les identifiants de session applicative en cours. Le serveur d'application comporte par ailleurs une unité de communication 403 pour mettre en œuvre des communications, notamment avec des terminaux de communication pour mettre en œuvre un procédé selon un mode de réalisation.

Le serveur d'application peut par ailleurs comporter un module de fourniture d'accès à une session applicative courante (non représentée) connectée à un module d'association d'un groupe de terminaux de communication à une session applicative (non représenté). Ces modules peuvent faire partie de l'unité de contrôle ou constituer des modules indépendants de l'unité de contrôle.

Bien entendu, la présente invention ne se limite pas aux formes de réalisation décrites, d'autres variantes et combinaisons de caractéristiques sont possibles.

## Revendications

1. Procédé de gestion de session applicative (206) mise en œuvre au moyen d'un serveur d'application (10), ladite session applicative (206) étant accessible par une pluralité de terminaux de communication (12, 13, 18, 19, 20) d'un groupe de terminaux de communication (14, 21) parmi au moins un premier groupe de terminaux et un deuxième groupe de terminaux, le groupe de terminaux (14, 21) étant associé à un groupe d'utilisateurs (15, 22), le procédé de gestion comportant une fourniture d'un accès, pour un premier terminal de communication (13), à une session applicative courante (206) initiée par un deuxième terminal de communication (12) d'un premier groupe de terminaux (14) associé à un groupe d'utilisateurs (15) dont les utilisateurs sont autorisés à partager des données utilisateurs de la session applicative courante,
à condition que ledit premier terminal de communication (13) appartienne au premier groupe de terminaux de communication (14), la fourniture d'accès à la session applicative courante comportant, en fonction d'un identifiant du premier terminal client compris dans une requête d'accès (207) à ladite session applicative en provenance du premier terminal de communication (13), une détermination d'un identifiant de session de ladite session applicative courante (206) initiée par le deuxième terminal de communication du premier groupe de terminaux de communication auquel appartient le premier terminal de communication, la session applicative courante étant accessible simultanément par la pluralité de terminaux de communication (12, 13) du premier groupe de terminaux de communication(14), les données utilisateurs fournies par la session applicative courante au premier terminal de communication (13) et au deuxième terminal de communication (12) étant cohérentes.

2. Procédé de gestion selon la revendication 1, comportant en outre une étape consistant à déterminer (T303) si le premier terminal de communication (13) appartient audit premier groupe de terminaux de communication (14) associé à ladite session applicative courante (206).

3. Procédé selon l'une des revendications 1 à 2, comportant en outre, lors d'un établissement d'une session applicative suite à la réception (S300) d'une requête d'accès à une session applicative d'un deuxième terminal de communication (12) appartenant à un deuxième groupe de terminaux de communication (14, 21), une association (S304, 202) dudit deuxième groupe de terminaux de communication (14, 21) à ladite session applicative, ladite session applicative ainsi établie constituant une session applicative courante.

4. Procédé de gestion selon la revendication 3, dans lequel l'association (S304, 202) est réalisée en associant un identifiant de groupe fonction d'un identifiant du deuxième terminal client à un identifiant de session de ladite session applicative (206), ladite requête d'accès comportant ledit identifiant du deuxième terminal client.

5. Procédé selon la revendication 1, comportant en outre une étape de réception (S300) d'une requête d'accès (207) au serveur d'application (10) pour accéder à la session applicative courante (206) provenant du premier terminal (13), ladite requête d'accès (207) comportant l'identifiant de session permettant d'accéder à ladite session applicative courante.

6. Programme d'ordinateur comportant des instructions pour la mise en œuvre d'un procédé selon la revendication 1 lorsqu'il est chargé et exécuté par un processeur d'un serveur d'application.

7. Serveur d'application (10, 400) configuré pour mettre en œuvre une session applicative (206), ladite session applicative (206) étant accessible par une pluralité de terminaux de communication (12, 13, 18, 19, 20) d'un groupe de terminaux de communication (14, 21) parmi au moins un premier groupe de terminaux et un deuxième groupe de terminaux, le groupe de terminaux (14, 21) étant associé à un groupe d'utilisateurs (15, 22), le serveur d'application comportant une unité de contrôle (402) configurée pour fournir un accès pour un premier terminal de communication (13) à une session applicative courante (206) initiée par un deuxième terminal de communication (12) d'un premier groupe de terminaux (14) associé à un groupe d'utilisateurs (15) dont les utilisateurs sont autorisés à partager des données utilisateurs de la session applicative courante, et
pour déterminer en fonction d'un identifiant du premier terminal client compris dans une requête d'accès (207) à ladite session applicative en provenance du premier terminal de communication (13), un identifiant de session de ladite session applicative courante (206) initiée par le deuxième terminal de communication du premier groupe de terminaux de communication auquel appartient le premier terminal de communication, à condition que ledit premier terminal de communication (13) appartienne au premier groupe de terminaux de communication (14), la session applicative courante étant accessible simultanément par la pluralité de terminaux de communication (12, 13) du premier groupe de terminaux de communication(14), les données utilisateurs fournies par la session applicative courante au premier terminal de communication (13) et au deuxième terminal de communication (12) étant cohérentes.

8. Serveur selon la revendication 7, comportant en outre un module de fourniture d'accès à une session applicative courante.

9. Serveur selon l'une des revendications 7 et 8, comportant en outre un module d'association d'un groupe de terminaux à une session de communication courante.

10. Système de communication comportant un serveur d'application (10, 400) selon la revendication 9 et au moins un terminal de communication pour communiquer avec le serveur d'application.

## Patentansprüche

1. Verfahren zur Verwaltung einer Anwendungssitzung (206), die mittels eines Anwendungsservers (10) durchgeführt wird, wobei eine Vielzahl von Kommunikationsendgeräten (12, 13, 18, 19, 20) einer Gruppe von Kommunikationsendgeräten (14, 21) unter mindestens einer ersten Gruppe von Endgeräten und mindestens einer zweiten Gruppe von Endgeräten auf die Anwendungssitzung (206) zugreifen kann, wobei die Gruppe von Endgeräten (14, 21) einer Gruppe von Benutzern (15, 22) zugeordnet ist, wobei das Verwaltungsverfahren eine Bereitstellung eines Zugriffs, für ein erstes Kommunikationsendgerät (13), auf eine laufende Anwendungssitzung (206) aufweist, die von einem zweiten Kommunikationsendgerät (12) einer ersten Gruppe von Endgeräten (14) gestartet wird, die eine Gruppe von Benutzern (15) zugeordnet ist, deren Benutzer autorisiert sind, Benutzerdaten der laufenden Anwendungssitzung gemeinsam zu nutzen,
wobei unter der Bedingung, dass das erste Kommunikationsendgerät (13) zur ersten Gruppe von Kommunikationsendgeräten (14) gehört, die Bereitstellung des Zugriffs auf die laufende Anwendungssitzung abhängig von einer Kennung des ersten Client-Endgeräts, die in einer Zugriffsanforderung (207) vom ersten Kommunikationsendgerät (13) auf die Anwendungssitzung enthalten ist, eine Bestimmung einer Sitzungskennung der laufenden Anwendungssitzung (206) aufweist, die vom zweiten Kommunikationsendgerät der ersten Gruppe von Kommunikationsendgeräten gestartet wird, zu der das erste Kommunikationsendgerät gehört, wobei die Vielzahl von Kommunikationsendgeräten (12, 13) der ersten Gruppe von Kommunikationsendgeräten (14) gleichzeitig auf die laufende Anwendungssitzung zuggreifen kann, wobei die durch die laufende Anwendungssitzung an das erste Kommunikationsendgerät (13) und an das zweite Kommunikationsendgerät (12) gelieferten Benutzerdaten kohärent sind.

2. Verwaltungsverfahren nach Anspruch 1, das außerdem einen Schritt aufweist, der darin besteht, zu bestimmen (T303), ob das erste Kommunikationsendgerät (13) zur ersten Gruppe von Kommunikationsendgeräte (14) gehört, die der laufenden Anwendungssitzung (206) zugeordnet ist.

3. Verfahren nach einem der Ansprüche 1 bis 2, das außerdem bei einem Aufbau einer Anwendungssitzung nach dem Empfang (S300) einer Zugriffsanforderung von einem zu einer zweiten Gruppe von Kommunikationsendgeräten (14, 21) gehörenden zweiten Kommunikationsendgerät (12) auf eine Anwendungssitzung eine Zuordnung (S304, 202) der zweiten Gruppe von Kommunikationsendgeräten (14, 21) zur Anwendungssitzung aufweist, wobei die so aufgebaute Anwendungssitzung eine laufende Anwendungssitzung bildet.

4. Verwaltungsverfahren nach Anspruch 3, wobei die Zuordnung (S304, 202) durchgeführt wird, indem eine Gruppenkennung abhängig von einer Kennung des zweiten Client-Endgeräts einer Sitzungskennung der Anwendungssitzung (206) zugeordnet wird, wobei die Zugriffsanforderung die Kennung des zweiten Client-Endgeräts aufweist.

5. Verfahren nach Anspruch 1, das außerdem einen Empfangsschritt (S300) einer vom ersten Endgerät (13) kommenden Zugriffsanforderung (207) an den Anwendungsserver (10) aufweist, um auf die laufende Anwendungssitzung (206) zuzugreifen, wobei die Zugriffsanforderung (207) die Sitzungskennung aufweist, die den Zugriff auf die laufende Anwendungssitzung erlaubt.

6. Computerprogramm, das Anweisungen zur Durchführung eines Verfahrens nach Anspruch 1 aufweist, wenn es von einem Prozessor des Anwendungsservers geladen und ausgeführt wird.

7. Anwendungsserver (10, 400) der konfiguriert ist, eine Anwendungssitzung (206) durchzuführen, wobei eine Vielzahl von Kommunikationsendgeräten (12, 13, 18, 19, 20) einer Gruppe von Kommunikationsendgeräten (14, 21) unter mindestens einer ersten Gruppe von Endgeräten und einer zweiten Gruppe von Endgeräten auf die Anwendungssitzung (206) zugreifen kann, wobei die Gruppe von Endgeräten (14, 21) einer Gruppe von Benutzern (15, 22) zugeordnet ist, wobei der Anwendungsserver eine Steuereinheit (402) aufweist, die konfiguriert ist, für ein erstes Kommunikationsendgerät (13) einen Zugriff auf eine laufende Anwendungssitzung (206) zu liefern, die von einem zweiten Kommunikationsendgerät (12) einer ersten Gruppe von Endgeräten (14) gestartet wird, die einer Gruppe von Benutzern (15) zugeordnet ist, deren Benutzer autorisiert sind, Benutzerdaten der laufenden Anwendungssitzung gemeinsam zu nutzen, und
abhängig von einer Kennung des ersten Client-Endgeräts, die in einer vom ersten Kommunikationsendgerät (13) kommenden Zugriffsanforderung (207) auf die Anwendungssitzung enthalten ist, eine Sitzungskennung der laufenden Anwendungssitzung (206) zu bestimmen, die vom zweiten Kommunikationsendgerät der ersten Gruppe von Kommunikationsendgeräten gestartet wird, zu der das erste Kommunikationsendgerät gehört, unter der Voraussetzung, dass das erste Kommunikationsendgerät (13) zur ersten Gruppe von Kommunikationsendgeräten (14) gehört, wobei die Vielzahl von Kommunikationsendgeräten (12, 13) der ersten Gruppe von Kommunikationsendgeräten (14) gleichzeitig auf die laufende Anwendungssitzung zugreifen kann, wobei die von der laufenden Anwendungssitzung an das erste Kommunikationsendgerät (13) und an das zweite Kommunikationsendgerät (12) gelieferten Benutzerdaten kohärent sind.

8. Server nach Anspruch 7, der außerdem ein Modul zur Bereitstellung des Zugriffs auf eine laufende Anwendungssitzung aufweist.

9. Server nach einem der Ansprüche 7 und 8, der außerdem ein Modul zur Zuordnung einer Gruppe von Endgeräten zu einer laufenden Kommunikationssitzung aufweist.

10. Kommunikationssystem, das einen Anwendungsserver (10, 400) nach Anspruch 9 und mindestens ein Kommunikationsendgerät zur Kommunikation mit dem Anwendungsserver aufweist.

## Claims

1. Method for managing an application session (206) implemented by means of an application server (10), said application session (206) being accessible by a plurality of communication terminals (12, 13, 18, 19, 20) in a group of communication terminals (14, 21) from at least a first group of terminals and a second group of terminals, the group of terminals (14, 21) being associated with a group of users (15, 22), the management method including providing access, for a first communication terminal (13), to a current application session (206) initiated by a second communication terminal (12) in a first group of terminals (14) that is associated with a group of users (15), the users of which are authorized to share user data of the current application session,
provided that said first communication terminal (13) belongs to the first group of communication terminals (14), the provision of access to the current application session including, according to an identifier of the first client terminal included in a request (207) to access said application session from the first communication terminal (13), determining a session identifier of said current application session (206) initiated by the second communication terminal in the first group of communication terminals to which the first communication terminal belongs, the current application session being accessible simultaneously by the plurality of communication terminals (12, 13) in the first group of communication terminals (14), the user data delivered by the current application session to the first communication terminal (13) and to the second communication terminal (12) being coherent.

2. Management method according to Claim 1, further including a step of determining (T303) whether the first communication terminal (13) belongs to said first group of communication terminals (14) that is associated with said current application session (206).

3. Method according to either of Claims 1 and 2, further including, when establishing an application session after receiving (S300) a request to access an application session from a second communication terminal (12) belonging to a second group of communication terminals (14, 21), associating (S304, 202) said second group of communication terminals (14, 21) with said application session, said application session thus established constituting a current application session.

4. Management method according to Claim 3, wherein the association (S304, 202) is carried out by associating an identifier of the group according to an identifier of the second client terminal with a session identifier of said application session (206), said access request including said identifier of the second client terminal.

5. Method according to Claim 1, further including a step (S300) of receiving an access request (207) by means of the application server (10) for accessing the current application session (206) from the first terminal (13), said access request (207) including the session identifier allowing said current application session to be accessed.

6. Computer program including instructions for implementing a method according to Claim 1 when it is loaded and executed by a processor of an application server.

7. Application server (10, 400) configured to implement an application session (206), said application session (206) being accessible by a plurality of communication terminals (12, 13, 18, 19, 20) in a group of communication terminals (14, 21) from at least a first group of terminals and a second group of terminals, the group of terminals (14, 21) being associated with a group of users (15, 22), the application server including a control unit (402) configured to provide access, for a first communication terminal (13), to a current application session (206) initiated by a second communication terminal (12) in a first group of terminals (14) that is associated with a group of users (15), the users of which are authorized to share user data of the current application session, and
to determine, according to an identifier of the first client terminal included in a request (207) to access said application session from the first communication terminal (13), a session identifier of said current application session (206) initiated by the second communication terminal in the first group of communication terminals to which the first communication terminal belongs, provided that said first communication terminal (13) belongs to the first group of communication terminals (14), the current application session being accessible simultaneously by the plurality of communication terminals (12, 13) in the first group of communication terminals (14), the user data delivered by the current application session to the first communication terminal (13) and to the second communication terminal (12) being coherent.

8. Server according to Claim 7, further including a module for providing access to a current application session.

9. Server according to either of Claims 7 and 8, further including a module for associating a group of terminals with a current communication session.

10. Communication system including an application server (10, 400) according to Claim 9 and at least one communication terminal for communicating with the application server.
